# EUROPÄISCHE PATENTSCHRIFT

(11) **EP 0 326 705 B1**
(45) Veröffentlichungstag und Bekanntmachung des Hinweises auf die Patenterteilung: **15.12.1993**
(21) Anmeldenummer: 88121470.4
(22) Anmeldetag: 22.12.1988
(51) Int. Cl.: B65G 47/26

(54) **Vorrichtung zum Verändern von Abständen zwischen hintereinander bewegten Gegenständen**
Device for changing distances between objects moving one behind the other
Dispositif de modification des distances entre des objets se déplaçant l'un après l'autre

(30) Priorität: 02.02.1988 CH 351/88
(43) Veröffentlichungstag der Anmeldung: 09.08.1989
(73) Patentinhaber: ELPATRONIC AG, CH-6300 Zug (CH)
(72) Erfinder: Bogatzki, Hans Ulrich, CH-8049 Zürich (CH)

(56) Entgegenhaltungen:
- DE-A- 3 238 332
- DE-A- 3 302 106
- DE-C- 283 552
- US-A- 2 609 926

## Beschreibung

Die Erfindung betrifft eine Vorrichtung zum Verändern von Abständen zwischen hintereinander bewegten Gegenständen, insbesondere Behältern, mit
- einer Nabe, die um eine Drehachse drehantreibbar ist,
- mehreren Speichen, die in bestimmten Winkelabständen von der Nabe wegragen und diametral paarweise angeordnet sind,
- Mitnehmern, die an je einer Speiche drehbar angeordnet und zum Mitnehmen je eines Gegenstandes radial verschiebbar ausgebildet sind, und
- einer Führung, die sich rings um die Nabe erstreckt und zum periodischen Verändern des radialen Abstandes der Mitnehmer von der Nabe während deren Drehung mindestens einen Abschnitt aufweist, in dessen Verlauf sich der Abstand von der Drehachse ändert.

Aus der DE-A-32 45 908 ist eine Vorrichtung zum Prüfen von Flaschen bekannt, bei der die ankommenden Flaschen mittels einer waagerecht angeordneten Transportschnecke vereinzelt und in vorgegebenen Abständen an Aussparungen eines umlaufenden Sternrades weitergegeben werden. Transportschnecken der beschriebenen Art arbeiten als Vorrichtungen zum Vereinzeln von Gegenständen nur bedingt zufriedenstellend. So muss die Gestaltung des Querschnitts der Gewindegänge eng an die Querschnittsform der zu fördernden Gegenstände angepasst sein. Die Gewindesteigung bestimmt ein für allemal die Abstände, in denen die Gegenstände am Ende der Transportschnecke freigegeben werden. Für Gegenstände unterschiedlicher Gestalt ist jeweils eine andere Transportschnecke erforderlich, ebenfalls dann, wenn die Abstände, mit denen die Gegenstände die Transportschnecke verlassen sollen, geändert werden. Nachteilig ist auch, dass die Transportschnecke jeden Gegenstand nur linienförmig, nicht flächenhaft berührt und dass an der Berührungslinie ständig gleitende Bewegungen zwischen Förderschnecke und Gegenstand stattfinden; infolgedessen kann die Oberfläche der Gegenstände beschädigt werden. Zumindest bei hoher Fördergeschwindigkeit und entsprechend hoher Beschleunigung der Gegenstände besteht auch die Gefahr, dass die Gegenstände umfallen, insbesondere wenn die Standfläche im Verhältnis zur Höhe klein ist.

Eine Vorrichtung der eingangs genannten Gattung ist aus der DE-A-32 38 332 bekannt. Jene Vorrichtung dient zur Durchführung verschiedener Handhabungs- und Bearbeitungsvorgänge an Gegenständen und insbesondere auch zu deren Uebergabe an eine benachbarte gleichartige Vorrichtung. Dabei bilden Nabe, Speichen und Führung eine starre Einheit, während die Mitnehmer längs der Speichen verschiebbar sind. Diese Vorrichtung benötigt Führungen von komplizierter geometrischer Form, die schwierig und nur mit hohen Kosten herstellbar sind. Irgendwelche Aenderungen am Bahnverlauf oder bei den Abständen der geförderten Gegenstände sind nicht vorgesehen bzw. wären nur durch umständliches Auswechseln der Führungen zu bewerkstelligen.

Der Erfindung liegt deshalb die Aufgabe zugrunde, eine Vorrichtung der genannten Gattung derart zu gestalten, dass sie sich leicht an Gegenstände unterschiedlicher Gestalt anpassen und auf unterschiedliche Abstände der Gegenstände einstellen lässt und imstande ist, mit grosser Fördergeschwindigkeit betriebssicher zu arbeiten.

Diese Aufgabe wird erfindungsgemäss dadurch gelöst,
- dass die Speichen in der Nabe radial verschiebbar geführt sind,
- dass jeder Mitnehmer an der zugehörigen Speiche angelenkt und zusammen mit dieser verschiebbar ist
- und dass die Drehachse der Nabe in ihrer Lage zur Führung einstellbar ist.

Auf diese Weise werden die an die Vorrichtung gestellten Anforderungen mit vergleichsweise einfachen Mitteln erfüllt; insbesondere können Führungen von einfacher geometrischer Form (Kreis, Ellipse) verwendet werden, die einfach und vor allem genau herstellbar sind.

Vorteilhafte weitere Ausgestaltungen des Erfindungsgegenstandes sind in den abhängigen Ansprüchen angegeben.

Ausführungsbeispiele der erfindungsgemässen Vorrichtung werden nachstehend anhand der Zeichnung mit weiteren Einzelheiten erläutert. Es zeigen:
- Fig. 1: eine Draufsicht einer ersten Ausführungsform einer erfindungsgemässen Vorrichtung,
- Fig. 2: den senkrechten Schnitt II-II in Fig. 1,
- Fig. 3: eine Ansicht derselben Vorrichtung schräg von oben, wobei einige Vorrichtungsteile weggelassen sind,
- Fig. 4: eine der Fig. 3 entsprechende Schrägansicht, in der weitere Teile fortgelassen sind, um eine erste Einstellung der Vorrichtung zu verdeutlichen,
- Fig. 5: eine entsprechende Schrägansicht der Vorrichtung in einer zweiten Einstellung,
- Fig. 6: eine Draufsicht einer zweiten Ausführungsform einer erfindungsgemässen Vorrichtung,
- Fig. 7: einen senkrechten Schnitt durch die Vorrichtung gemäss Fig. 6,
- Fig. 8: eine Draufsicht einer dritten Ausführungsform einer erfindungsgemässen Vorrichtung, und
- Fig. 9: einen senkrechten Schnitt durch die Vorrichtung gemäss Fig. 8.

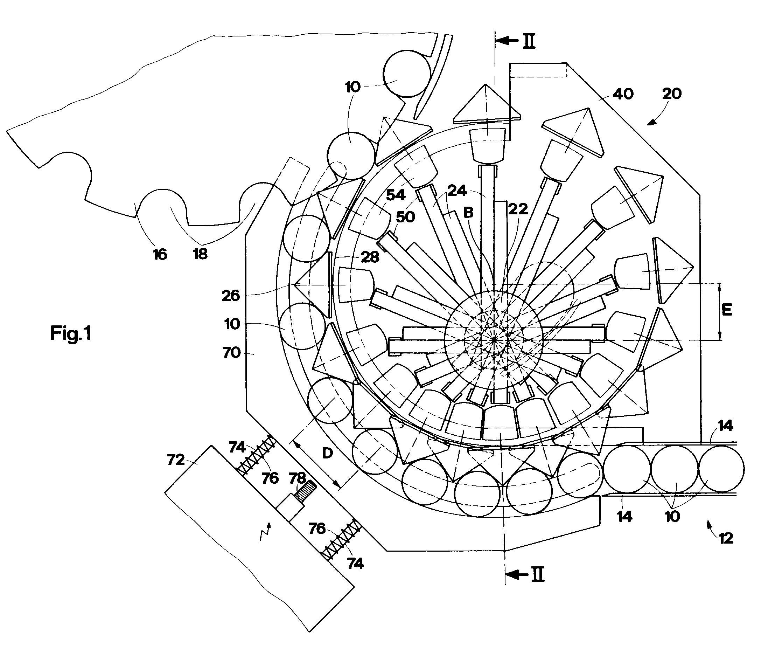

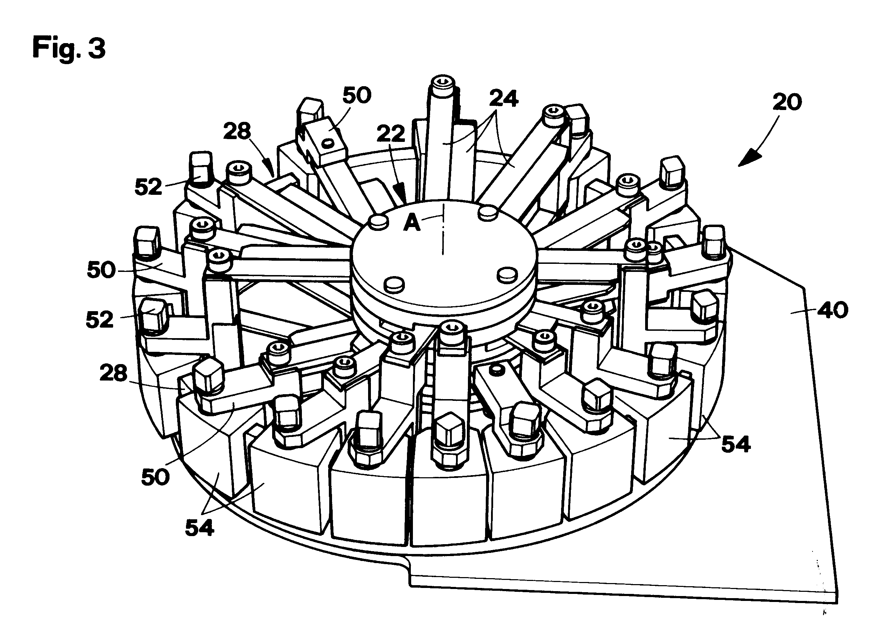

Gemäß Fig. 1 bis 5 werden Gegenstände 10 von kreisförmigem Grundriß auf einer Förderstrecke 12 zwischen seitlichen Begrenzungen 14 in lückenloser Reihe herangefördert. Die Gegenstände 10 sind beispielsweise Flaschen aus Glas, die gewaschen oder auf Sauberkeit geprüft oder gefüllt werden sollen. Bei den Gegenständen 10 kann es sich aber, um nur ein weiteres Beispiel zu nennen, auch um Dosenzargen aus Blech handeln, an die ein Boden und/oder Deckel angebördelt werden soll. Solche oder andere Arbeitsgänge sollen ausgeführt werden, nachdem die Gegenstände 10 an einen Rundtisch 16 übergeben worden sind, an dessen Rand in vorgegebenen Abständen Aussparungen 18 für je einen Gegenstand 10 angeordnet sind. Damit sich in jede der Aussparungen 18 ein Gegenstand 10 zwanglos einschieben läßt, müssen zwischen den auf der Förderstrecke 12 ankommenden, unmittelbar hintereinanderstehenden Gegenständen 10 Abstände geschaffen werden, die mit den Abständen zwischen je zwei aufeinanderfolgenden Aussparungen 18 übereinstimmen. Diesem Zweck dient eine Vorrichtung 20, die zwischen der Förderstrecke 12 und dem Rundtisch 16 angeordnet ist und im folgenden beschrieben wird.

Zu der Vorrichtung 20 gehört eine Nabe 22, die um eine senkrechte Drehachse A drehantreibbar ist. Von der Nabe 22 weg erstrecken sich in radialen Richtungen und in gleichmäßigen Winkelabständen voneinander zahlreiche Speichen 24. An einem Ende jeder Speiche 24 ist ein Mitnehmer 26 angeordnet, der an einer Führung 28 geführt ist. Bei dem Ausführungsbeispiel gemäß Fig. 1 bis 5 ist die Führung 28 ein rings um die Nabe 22 angeordneter Kreiszylinder mit senkrechter Achse B.

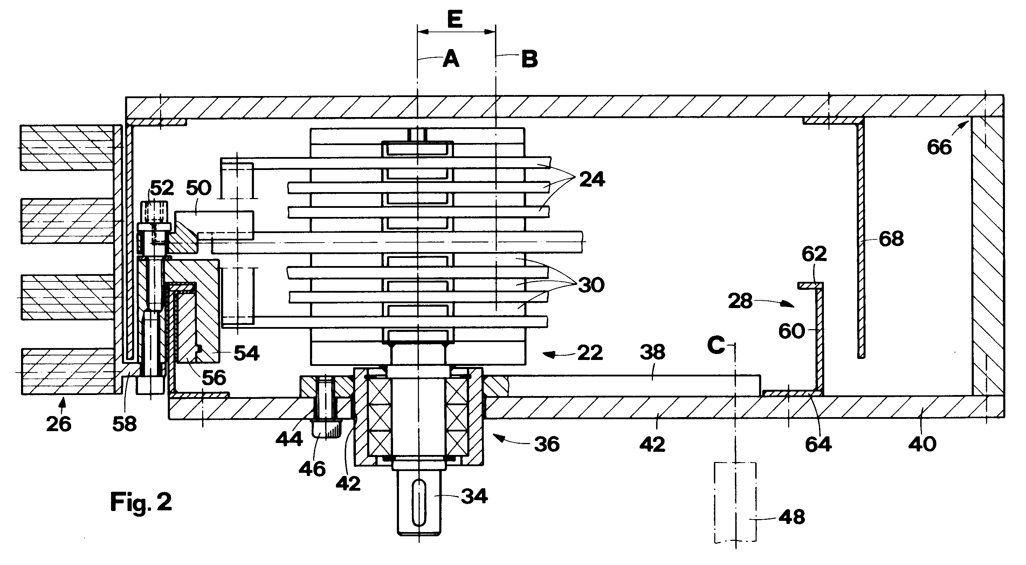

Die Nabe 22 ist aus gleichachsig übereinander angeordneten Scheiben 30 zusammengesetzt, deren Anzahl halb so groß ist wie die Anzahl der Speichen 24. Jede der Scheiben 30 hat eine diametrale Aussparung 32 in Form einer Nut von rechteckigem Querschnitt. In jeder der Aussparungen 32 sind zwei Speichen 24 geführt, deren Mitnehmer 26 einander in bezug auf die Drehachse A diametral gegenüber angeordnet sind. Die Scheiben 30 sind durch Schrauben axial zusammengehalten und gemäß Fig. 2 fest mit einer senkrechten Welle 34 verbunden, die mittels einer im dargestellten Beispiel aus mehreren Kugellagern bestehenden Lagerung 36 an einem Lenker 38 gelagert ist.

Der Lenker 38 ist um eine senkrechte Schwenkachse C schwenkbar an einer waagerechten Grundplatte 40 gelagert. Diese hat einen breiten Schlitz 42 und einen schmaleren Schlitz 44, die sich beide bogenförmig um die Schwenkachse C erstrecken und eine Länge haben, die einer Schwenkung des Lenkers 38 um ungefähr 90° entspricht. Im Schlitz 42 ist die Lagerung 36 verstellbar. Im Schlitz 44 ist eine Klemmschraube 46 geführt, die sich derart festziehen läßt, daß die Nabe 22 in einer gewählten Stellung an der Grundplatte 40 befestigt ist. Während jeder Umdrehung der Nabe 22 ändert sich der Abstand D, den aufeinanderfolgende Gegenstände 10 voneinander haben, von einem Minimum Dmin auf ein Maximum Dmax und wieder zurück auf Dmin. Die Differenz zwischen Dmax und Dmin ist abhängig von der Exzentrizität E der Drehachse A der Nabe 22 in bezug auf die Achse B der Führung 28.

Die Welle 34 samt Nabe 22 ist in beliebiger Weise drehantreibbar; beim dargestellten Beispiel ist vorgesehen, daß die Welle 34 von einem nicht dargestellten Motor über eine Zwischenwelle 48 angetrieben wird, die in bezug auf die Grundplatte 40 ortsfest und gleichachsig mit der Schwenkachse C gelagert ist.

Jeder der Mitnehmer 26 besteht hauptsächlich aus einem an der zugehörigen Speiche 24 befestigten Winkelstück 50, einem senkrechten Lagerbolzen 52 und einem Reiter 54, der durch den Lagerbolzen am zugehörigen Winkelstück schwenkbar gelagert ist und rittlings auf der Führung 28 sitzt. An jedem Reiter 54 ist radial innerhalb der Führung 28 ein Gleitbacken 56 aus Kunststoff mit geringem Reibungskoeffizienten befestigt und radial außerhalb der Führung 28 ein Formstück 58 befestigt. Im dargestellten Beispiel sind die Formstücke 58 in Draufsicht keilförmig und derart gestaltet, daß sie einander schuppenförmig überlagern können, wie dies in Fig. 1 unten rechts dargestellt ist. Die Führung 28 hat eine glatte zylindrische Innenfläche 60, an der die Gleitbacken 56 entlanggleiten, und die nach oben hin durch einen radial nach innen ragenden Flansch 62 und nach unten durch einen an der Grundplatte 40 befestigten Fuß 64 begrenzt ist.

Rings um die Führung 28 ist ein an der Grundplatte 40 befestigtes Gestell 66 angeordnet, das eine zylindrische Haube 68 zum Schutz gegen unbeabsichtigte Berührung der im Betrieb rasch umlaufenden Mitnehmer 26 trägt. Die Haube 68 läßt einen sektorförmigen Bereich ausgespart, in dem ein Bogenstück 70 angeordnet ist. Das Bogenstück 70 ist an seiner radial inneren Seite kreisbogenförmig und gleichachsig mit der Führung 28 gekrümmt, hat von dieser einen radialen Abstand, der an den Durchmesser der Gegenstände 10 angepaßt ist, und erstreckt sich vom Ende der Förderstrecke 12 bis zum Rundtisch 16. Auf diese Weise ist den Gegenständen 10 ein kreisbogenförmiger Weg vorgegeben, auf dem sie von der Förderstrecke 12 zum Rundtisch 16 gelangen, wenn die Nabe 22 sich, von oben gesehen, im Uhrzeigersinn dreht. Dabei wird der Abstand D aufeinanderfolgender Gegenstände 10 durch den Abstand aufeinanderfolgender Mitnehmer 26 bestimmt.

Wie vor allem aus Fig. 1 ersichtlich, haben aufeinanderfolgende Mitnehmer 26 ihren kleinsten Abstand voneinander an der Stelle, an der die Führung 28 ihren geringsten Abstand von der Drehachse A hat. Der größte Abstand zwischen aufeinanderfolgenden Mitnehmern 26 tritt an der diametral gegenüberliegenden Stelle auf, an der die Führung 28 ihren größten Abstand von der Drehachse A hat. Gemäß Fig. 1 bis 4 ist die Drehachse A so eingestellt, daß der Abstand aufeinanderfolgender Gegenstände 10 sich vom Ende der Förderstrecke 12 bis zur Übergabe der Gegenstände an den Rundtisch 16 ungefähr verdoppelt.

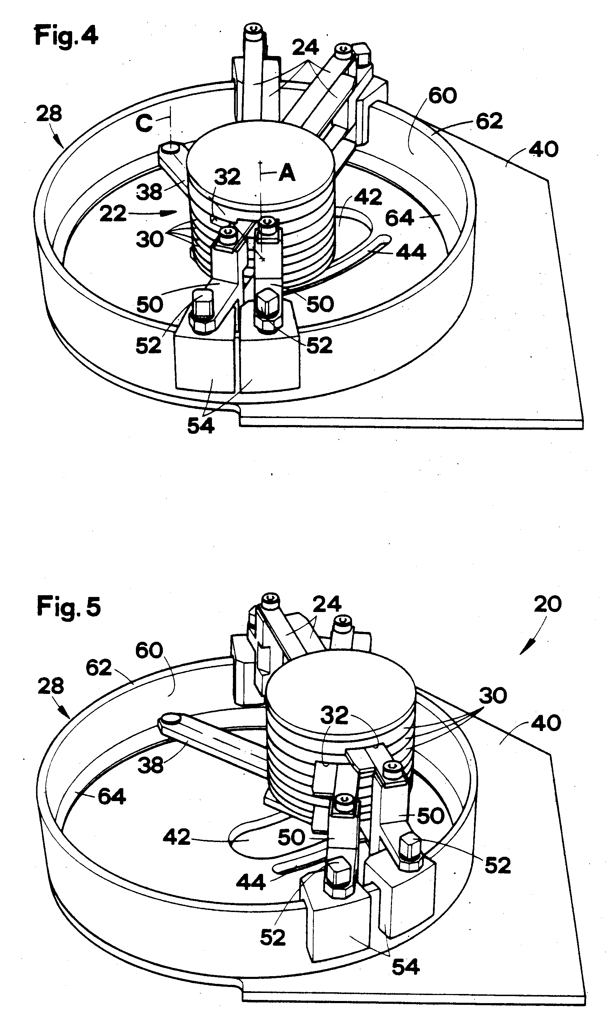

Wenn Gegenstände 10 größeren oder kleineren Durchmessers vereinzelt werden sollen und/oder wenn der Abstandszuwachs zwischen aufeinanderfolgenden Gegenständen 10 größer oder kleiner sein soll als dargestellt, wird die Klemmschraube 46 gelöst und der Lenker 38 derart geschwenkt, daß die Nabe 22 in bezug auf die Führung 28 eine den neuen Bedingungen entsprechende Exzentrizität E erhält. Eine neue Einstellung mit verändeter Exzentrizität ist in Fig. 5 gezeichnet.

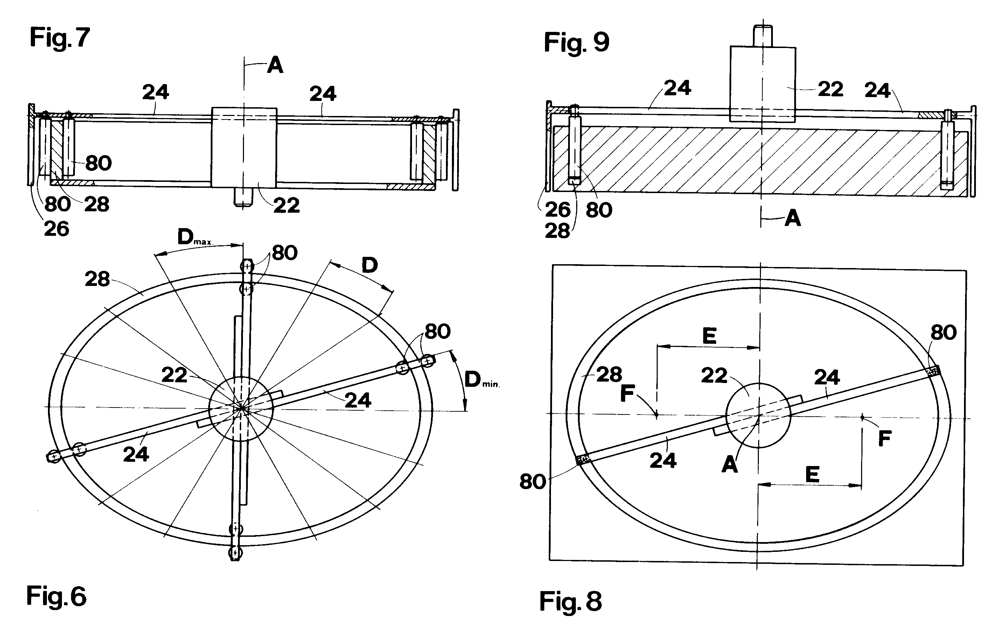

Die in Fig. 6 und 7 einerseits sowie in Fig. 8 und 9 andererseits dargestellten abgewandelten Ausführungsformen unterscheiden sich von der in Fig. 1 bis 5 dargestellten vor allem dadurch, daß die Führung 28 nicht kreisförmig, sondern elliptisch ist. Somit hat die Führung 28 selbst eine Exzentrizität E, die als Abstand ihres Mittelpunktes von jedem ihrer Brennpunkte F definiert ist. Die Nabe 22 ist in der Mitte der Führung 28 und somit um den Betrag E exzentrisch in bezug auf jeden der beiden Brennpunkte F gelagert. Auch damit wird erreicht, daß der Abstand D zwischen aufeinanderfolgenden Mitnehmern sich bei jeder Umdrehung der Nabe 22 periodisch ändert. Falls Lage und/oder Amplitude dieser periodischen Änderung an unterschiedliche Gegenstände 10 oder unterschiedliche Förderaufgaben angepaßt werden sollen, kann die Nabe 22 verstellt werden, beispielsweise längs der großen Hauptachse der elliptischen Führung 28 oder auch, wie in Fig. 1 bis 5 dargestellt, längs eines kreisbogenförmigen Schlitzes.

Bei der Ausführungsform gemäß Fig. 6 und 7 erstreckt sich die Führung 28 - insoweit vergleichbar mit Fig. 1 bis 5-nach oben. In einem Endbereich jeder der Speichen 24 ist ein Paar senkrechter Rollen 80 gelagert, die an der Innen- bzw. Außenseite der Führung 28 abwälzbar sind.

Im Unterschied dazu ist bei der Ausführungsform gemäß Fig. 8 und 9 an jeder Speiche 24 nur eine einzige senkrechte Rolle gelagert und die Führung 28 ist als Nut ausgebildet, in der die Rollen 80 geführt sind.

Während bei den drei gezeichneten Ausführungsbeispielen die Führung 28 ringförmig gestaltet ist und die Nabe 22 umschließt, ist für verschiedene Anwendungsfälle auch eine umgekehrte Gestaltung möglich, bei der die drehantreibbare Nabe ringförmig, insbesondere kreisringförmig, gestaltet ist und die Führung umschließt. In diesem Fall kann die Führung von einem beispielsweise kreisförmigen, jedoch in bezug auf die ringförmige Nabe exzentrisch einstellbaren zentralen Nocken gebildet sein, der sich im Betrieb nicht bewegt. Die Speichen können an ihren radial inneren Enden Gleit- oder Rollschuhe aufweisen, mit denen sie sich an der äußeren Umfangsfläche der nockenartigen Führung abstützen. Dabei ist zweckmäßigerweise zwischen dem radial inneren Ende jeder Speiche und der ringförmigen Nabe eine Feder angeordnet, die den im Betrieb auftretenden Zentrifugalkräften entgegenwirkt und die Anlage zwischen dem zugehörigen Gleit- oder Rollschuh und der nockenartigen Führung aufrechterhält.

Als Mitnehmer können abweichend von den gezeichneten Ausführungsbeispielen Saugnäpfe vorgesehen sein, die durch Kanäle in den Speichen während eines Teils ihres Umlaufs mit einer Saugpumpe verbunden werden. Alternativ können als Mitnehmer Magneten oder andere Vorrichtungen vorgesehen sein, die an Form und Materialbeschaffenheit der zu fördernden Gegenstände angepaßt sind.

## Patentansprüche

1. Vorrichtung zum Verändern von Abständen (D) zwischen hintereinander bewegten Gegenständen (10), insbesondere Behältern, mit
- einer Nabe (22), die um eine Drehachse (A) drehantreibbar ist,
- mehreren Speichen (24), die in bestimmten Winkelabständen von der Nabe (22) wegragen und diametral paarweise angeordnet sind,
- Mitnehmern (26), die an je einer Speiche (24) drehbar angeordnet und zum Mitnehmen je eines Gegenstandes (10) radial verschiebbar ausgebildet sind, und
- einer Führung (28), die sich rings um die Nabe (22) erstreckt und zum periodischen Verändern des radialen Abstandes der Mitnehmer (26) von der Nabe (22) während deren Drehung mindestens einen Abschnitt aufweist, in dessen Verlauf sich der Abstand von der Drehachse (A) ändert,
dadurch **gekennzeichnet,**
- dass die Speichen (24) in der Nabe (22) radial verschiebbar geführt sind,
- dass jeder Mitnehmer (26) an der zugehörigen Speiche (24) angelenkt und zusammen mit dieser verschiebbar ist
- und dass die Drehachse (A) der Nabe (22) in ihrer Lage zur Führung (28) einstellbar ist.

2. Vorrichtung nach Anspruch 1, dadurch gekennzeichnet, dass die Führung (28) kreisförmig ist und in bezug auf die Nabe (22) eine Exzentrizität (E) aufweist.

3. Vorrichtung nach Anspruch 2, dadurch gekennzeichnet, dass die Führung (28) ortsfest angeordnet und die Nabe (22) an einem Lenker (38) gelagert ist, der seinerseits in bezug auf die Führung (28) exzentrisch gelagert und feststellbar ist.

4. Vorrichtung nach Anspruch 1, dadurch gekennzeichnet, dass die Nabe (22) in mehreren zur Drehachse (A) normalen Ebenen je eine diametrale Aussparung (32) aufweist, in der zwei einander entgegengesetzt aus der Nabe herausragende Speichen (24) gemeinsam und aneinander geführt sind.

5. Vorrichtung nach Anspruch 4, dadurch gekennzeichnet, dass die Nabe (22) ein Paket aus gleichachsigen Scheiben (30) aufweist, in denen je eine diametrale Aussparung (32) ausgebildet ist.

## Claims

1. Apparatus for altering distances (D) between articles (10) moved one behind the other, particularly containers, having
- a hub (22) which can be driven in rotation about an axis of rotation (A),
- a plurality of spokes (24) which project away from the hub (22) at specific angular distances apart and are arranged diametrically in pairs,
- entrainment means (26) which are disposed rotatably one on each spoke (24) and are radially displaceable to entrain one article (10) each, and
- a guide (28) extending around the hub (22) and, for periodically altering the radial distance of the entrainment means (26) from the hub (22) during its rotation, incorporating at least one section over which the distance from the axis of rotation (A) varies,
characterised in that
- the spokes (24) are set in radially displaceable manner in the hub (22),
- each entrainment means (26) is hinged on the associated spoke (24) and adapted to be displaced therewith, and
- the position of the axis of rotation (A) of the hub (22) is adjustable relative to the guide (28).

2. Apparatus according to claim 1, characterised in that the guide (28) is annular in shape and has an eccentricity (E) in relation to the hub (22).

3. Apparatus according to claim 2, characterised in that the guide (28) is stationarily mounted and the hub (22) is mounted on a guide bar (38) which in turn is mounted eccentrically in relation to the guide (28) and can be locked.

4. Apparatus according to claim 1, characterised in that the hub (22) comprises a diametral recess (32) in each of a plurality of planes normal to the axis of rotation (A), in which recess two spokes (24) projecting opposite one another out of the hub (22) are guided jointly and against one another.

5. Apparatus according to claim 4, characterised in that the hub (22) comprises a stack of coaxial discs (30) , in each of which is formed a diametral recess (32).

## Revendications

1. Dispositif permettant de faire varier les espacements (D) entre des objets (10), notamment des récipients, déplacés l'un derrière l'autre, comprenant :
- un moyeu (22), qui est agencé de façon à pouvoir être entraîné en rotation autour d'un axe de rotation (A),
- plusieurs rayons (24) qui font saillie à partir du moyeu (22) suivant des écarts angulaires déterminés et sont disposés par paires suivant une direction diamétrale,
- des organes d'entraînement (26), qui sont disposés de façon à pouvoir pivoter chacun sur un rayon (24) et qui sont agencés de façon à pouvoir être déplacés radialement en vue d'entraîner chacun un objet (10), et
- une glissière (28) qui s'étend d'une manière annulaire autour du moyeu (22) et qui, en vue d'une modification périodique de la distance radiale des organes d'entraînement (26) au moyeu (22) pendant la rotation de ce dernier, comporte au moins une section sur le tracé de laquelle la distance à l'axe de rotation (A) varie,
caractérisé :
- en ce que les rayons (24) sont guidés dans le moyeu (22) de façon à pouvoir être déplacés radialement,
- en ce que chaque organe d'entraînement (26) est articulé sur le rayon( 24) associé et est agencé de façon à pouvoir être déplacé avec ce dernier,
- et en ce que la position de l'axe de rotation (A) du moyeu (22) vis-à-vis de la glissière (28) est réglable.

2. Dispositif suivant la revendication 1, caractérisé en ce que la glissière (28) a une forme circulaire et présente une excentricité (E) vis-à-vis du moyeu (22).

3. Dispositif suivant la revendication 2, caractérisé en ce que la glissière (28) est fixe et le moyeu (22) est monté sur un bras de guidage (38) qui, pour sa part, est monté d'une manière excentrée vis-à-vis de la glissière (28) et est agencé de façon à pouvoir être immobilisé.

4. Dispositif suivant la revendication 1, caractérisé en ce que le moyeu (22) comporte, dans chacun de plusieurs plans perpendiculaires à l'axe de rotation (A), un évidement diamétral (32) dans lequel sont guidés, ensemble et en appui l'un sur l'autre, deux rayons (24) qui font saillie hors du moyeu dans des sens opposés l'un à l'autre.

5. Dispositif suivant la revendication 4, caractérisé en ce que le moyeu (22) comprend un empilement de disques (30) qui ont le même axe et dans chacun desquels est ménagé un évidement diamétral (32).
